# EUROPEAN PATENT APPLICATION

(11) **EP 2 757 436 A2**
(43) Date of publication of application: **23.07.2014**
(21) Application number: 14151799.5
(22) Date of filing: 20.01.2014
(51) Int. Cl.: G05D 23/19, F24F 11/00

(54) **A controller configured to receive a CFM setting less than a blower minimum in a zoning application, an HVAC system including the controller and a method of operating the controller**

(30) Priority: 21.01.2013 US 201361754932 P; 31.05.2013 US 201313907308
(71) Applicant: Lennox Industries Inc., Richardson, TX 75080 (US)
(72) Inventor: HREJSA, Pete, Richardson, TX Texas 75080 (US)
(74) Representative: Williams, David John

(57) **Abstract**

The disclosure provides a HVAC system, a method of operating a controller of an HVAC system and a controller of an HVAC system. In one embodiment, the HVAC system includes: (1) a blower having a minimum CFM value, and (2) a controller having (2A) an interface configured to receive a desired CFM value for conditioning a zone and (2B) a processor configured to determine a total CFM value for conditioning multiple zones including the above zone based on the desired CFM value. The desired CFM value is below the minimum CFM value of the blower.

## Description

### CROSS-REFERENCE TO RELATED APPLICATION

This application claims the benefit of U.S. Provisional Application Serial No. 61/754,932, filed by Charavda, et al., on January 21, 2013, entitled "USER INTERFACE SCREENS AND CONTROLLER FOR HVAC SYSTEM," commonly assigned with this application and incorporated herein by reference.

### TECHNICAL FIELD

This application is directed, in general, to heating, ventilating and air conditioning (HVAC) systems and, more specifically, to zoned HVAC systems.

### BACKGROUND

HVAC systems are used to regulate environmental condition within an enclosed space. Typically, HVAC systems have an air blower that pulls air from the enclosed space through ducts and pushes the air back into the enclosed space through additional ducts after conditioning the air (e.g., heating, cooling, humidifying or dehumidifying the air). To direct operations of HVAC components including an air blower, each HVAC system includes a HVAC controller. For zoned HVAC systems, the HVAC controllers calculate, whenever conditioning is requested, the volume of air that needed for conditioning the requesting zone(s). The calculated value is sent to the blower to generate and provide the corresponding volume of air to be dispersed to the conditioning requested zones.

### SUMMARY

In one aspect, the disclosure provides a HVAC system. In one embodiment, the HVAC system includes: (1) a blower having a minimum CFM value, and (2) a controller having an interface configured to receive a desired CFM value for conditioning a zone and a processor configured to determine a total CFM value for conditioning multiple zones including the above zone based on the desired CFM value. The desired CFM is below the minimum CFM value of the blower.

In another aspect, a controller for a HVAC system is disclosed. In one embodiment, the controller includes (1) an interface configured to receive a desired CFM value for conditioning a zone and (2) a processor configured to determine a total CFM value for conditioning multiple zones including the above zone based on the desired CFM value. The desired CFM is below a minimum CFM value of a blower for the HVAC system.

In yet another aspect, a method of operating a blower is provided. The method comprises the steps of (1) receiving a desired CFM value for conditioning a zone, and (2) determining a total CFM for conditioning multiple zones including the above zone based on the desired CFM value. The desired CFM value is below a minimum CFM value of the blower.

### BRIEF DESCRIPTION

Reference is now made to the following descriptions taken in conjunction with the accompanying drawings, in which:
FIG. 1 is a high-level block diagram of an embodiment of a HVAC system constructed according to the principles of the disclosure;
FIG. 2 is a block diagram of an embodiment of a controller constructed according to the principles of the disclosure;
FIG. 3 illustrates an example of an embodiment of an HVAC system that is constructed according to the principles of the disclosure; and
FIG. 4 is a flow diagram of an embodiment of a method of operating a controller of a HVAC system carried out according to the principles of the disclosure.

### DETAILED DESCRIPTION

Air blowers have a minimum value that indicates the minimum volume of air it can provide. This value will be hereinafter referred as 'blower minimum cubic foot per minute (CFM) value.' In zoned HVAC applications, there is often a need to zone a single area by itself that needs less volume of air than the blower minimum CFM value to condition the environmental condition therein. But as the least CFM value one could set for a single zone in conventional HVAC systems is the blower minimum CFM value, when zoned by itself, each of these single areas has been over-blown and conditioned.

In some applications, these single areas requiring less than the blower minimum CFM values have been zoned with other area(s) in the building. But as each area in a zone has different environmental condition and yet they all have to be conditioned simultaneously as a zone, zoning multiple areas together had not proven to be effective. Thus, a HVAC system that can efficiently zone and condition an area that requires less CFM than the blower minimum is desired.

Disclosed herein is a HVAC system that allows, during its setup process, a CFM value for a zone to be less than the blower minimum CFM value, so that when this zone is conditioned concurrently with other zones, the desired CFM value for that zone is used for determining the total CFM value for conditioning instead of the blower minimum CFM value. Using the principles of the disclosure, the disclosed HVAC system can generate and provide an accurate volume of air to be dispersed to a zone that requires less CFM than the blower minimum.

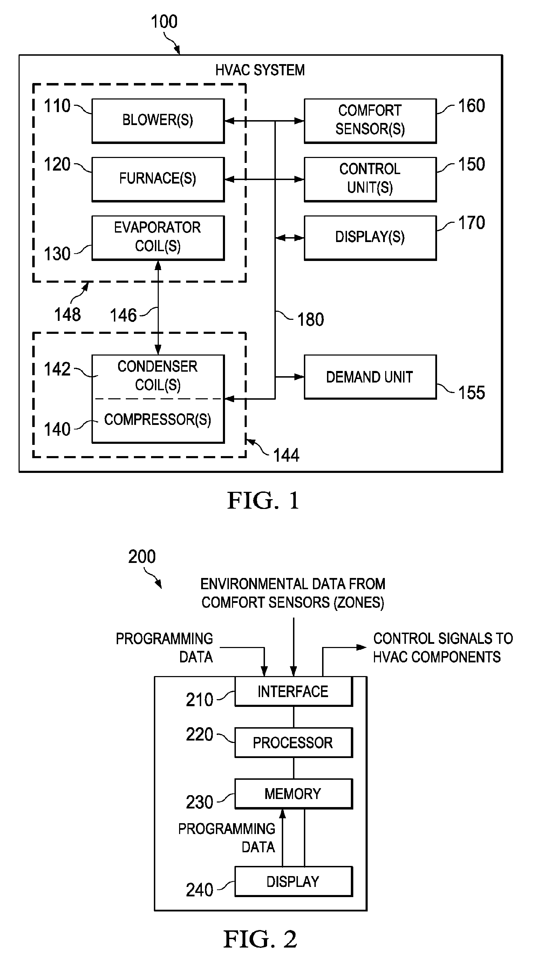

FIG. 1 is a high-level block diagram of an embodiment of a HVAC system 100, constructed according to the principles of the disclosure. The HVAC system 100 is a networked HVAC system configured to condition air within an enclosed space. In this embodiment, the system 100 includes one or more air blowers 110, one or more furnaces 120, typically associated with the one or more air blowers 110, and one or more refrigerant evaporator coils 130, also typically associated with the one or more air blowers 110. The air blowers 110, furnaces 120, and refrigerant evaporator coils 130 are collectively referred to as the "indoor unit." This embodiment of the system 100 also includes one or more compressors 140 and associated condenser coils 142, which are typically associated and referred to as the "outdoor unit" 144. The one or more compressors 140 and associated condenser coils 142 are typically connected to an associated evaporator coil 130 by a refrigerant line 146.

A demand unit 155 is representative of the various units exemplified by the air handler 110, furnace 120, and compressor 140, and more generally includes an HVAC component that provides a service in response to control by the control unit 150. The service may be, e.g., heating, cooling, humidification, dehumidification, or air circulation. A demand unit 155 may provide more than one service, and if so, one service may be a primary service, and another service may be an ancillary service. For example, for a heating unit that also circulates air, the primary service may be heating, and the ancillary service may be air circulation (e.g. by a blower).

The HVAC system 100 also includes one or more separate comfort sensors 160 that may be associated with the one or more control units 150 and also optionally associated with one or more displays 170. The one or more comfort sensors 160 provide current information, environmental data, about environmental conditions within zones of the enclosed space, such as temperature, humidity and air quality to the one or more control units 150 and displays 170.

In some embodiments, the one or more displays 170 can also provide functions such as operational, diagnostic and status message display. The one or more displays 170 can be an attractive, visual interface that allows an installer, user or repairman (collectively referred as "user") to perform actions with respect to the system 100 more intuitively.

The HVAC system 100 also includes a data bus 180, which in the illustrated embodiment is a serial bus, that couples the one or more air blowers 110, the one or more furnaces 120, the one or more evaporator condenser coils 142, the compressors 140, the one or more control units 150, the one or more remote comfort sensors 160 and the one or more displays 170 together such that data may be communicated therebetween or thereamong. All or some parts of the data bus 180 may be implemented as a wired or wireless network.

FIG. 2 illustrates a block diagram of an embodiment of a controller 200 constructed according to the principles of the disclosure. In this embodiment, the controller 200 is configured to determine a required CFM value for conditioning zone(s) in the HVAC system. The controller 200 comprises components such a component interface 210, a processor 220, a memory 230 and a user display 240. Additionally, the controller 200 may comprise additional components typically included within a controller for a HVAC system, such as a power supply or power port.

In one embodiment, each of the components in the controller 200 is operatively coupled to each other via conventional means to communicate information. While all of the components can be contained in one enclosure, in some embodiments, some of these components may be located outside the enclosure while being operatively coupled to other components. Also in some embodiments, a HVAC system has multiple controllers based on the structure or the number of zones in the building the HVAC system is applied.

The component interface 210 of the controller 200 serves as an interface between the controller 200 and the HVAC components. The interface 210 is configured to receive environmental data such as temperature, humidity and etc. from comfort sensors located throughout the building and transmit control signals such as instructions to perform services to the respective HVAC components. In one embodiment, the environmental data and control signals are communicated via the data bus 180.

The processor 220 of the controller 200 directs the operation of the controller 200 and instructs other HVAC components based on programming data. The programming data includes program schedule events (e.g., temperature setpoints, system modes and fan modes) in the HVAC system 100 and the set CFM values for each zone in the building. The processor 220 may be a conventional processor such as a microprocessor.

The memory 230 may be a conventional memory typically located within the controller, such as a microcontroller, that is constructed to store the programming data. The memory 230 may store operating instructions such as control signals to direct the operation of the processor 220 when initiated thereby. The operating instructions may correspond to algorithms that provide the functionality of the operating schemes disclosed herein.

The display 240 visually provides information to a user and allows interaction with the user. In one embodiment, the display 240 can provide a setup screen that allows the user to enter the programming data. In addition to the setup screen, the display 240 can provide other screens such as operational, diagnostic and status message screens.

When operated, the processor 220 of the controller 200 is configured to calculate a total CFM value for conditioning zone(s) and instruct the blower of the HVAC system to generate and provide a volume of air corresponding to that calculated total CFM value.

For example, when conditioning is requested, the processor 220 will determine the total CFM value needed to condition all of the zone(s) requesting conditioning by adding their set CFM values. Unless the calculated total CFM value is less than the blower minimum CFM value, the processor 220 will instruct the blower to generate and provide a volume of air matching the calculated total CFM to be dispersed to the requested zones.

But in some instances, the calculated total CFM value may be less than the blower minimum CFM value. In these instances, the blower minimum CFM value will be used as the total CFM value until the recalculated total CFM value exceeds the blower minimum CFM value. The total CFM value will be recalculated every time there is a change in the zones requesting conditioning. For example, in addition to the zones currently being conditioned, when other zone(s) request conditioning, the total CFM value is recalculated.

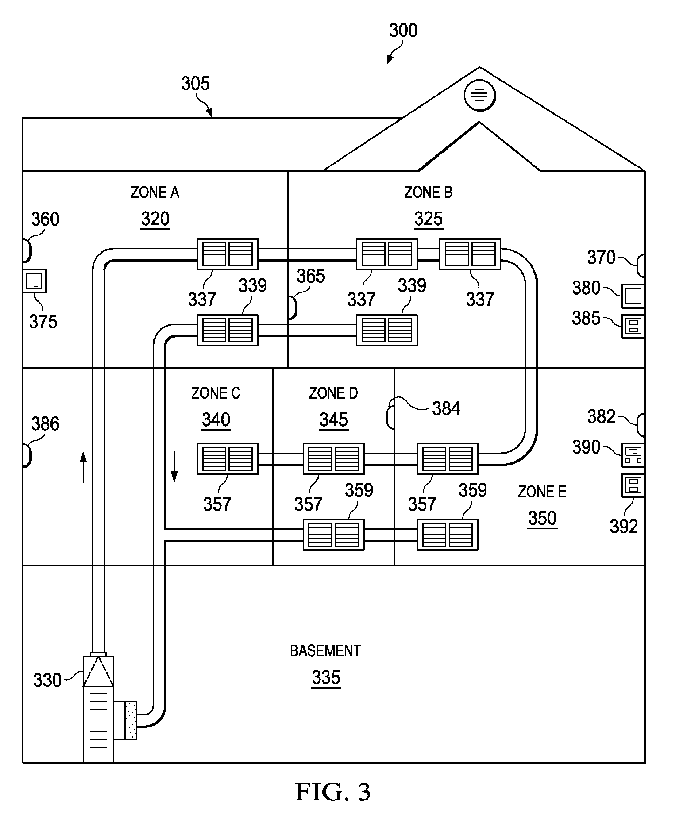

Figure 3 illustrates an example of an embodiment of an HVAC system 300 constructed according to the principles of the disclosure. A building 305 includes Zone A 320, Zone B 325, Zone C 340, Zone D 345, Zone E 350 and a basement 335. Blower unit 330 is located in the basement 335 and provides an appropriate volume of air to be dispersed into each zone in the building 305 through ducts via source vents 337 and 357 and return vents 339 and 359. In some embodiments, the ducts of the blower unit 330 include dampers that are operatively connected to each of the vents in the ducts. The building 305 may be a residential or commercial building.

The building 305 is made of two floors. The first floor includes comfort sensors 382, 384 and 386, a user display 390, and a controller 392. The second floor includes comfort sensors 360, 365 and 370, user displays 375 and 380 and a controller 385. The controller 392 may be optionally omitted with the controller 385 configured to control heating and cooling demands for the whole building. In FIG. 3, the comfort sensors 360, 365 and 370, user displays 375 and 380 and the blower unit 330 are networked to form a first subnet including the Zones A 320 and B 325. The comfort sensor 382, 384 and 386, user display 390 are networked to form a second subnet that includes Zones C 340, D 345 and E 350. As such, the controllers 385 and 392 can be considered subnet controllers. In some embodiments, the two subnets can be connected to form a single network.

In one embodiment, the blower unit 330 has a minimum CFM value of 200, and Zones A, B, C, D, and E have desired CFM values of 150, 450, 200, 100, and 300, respectively. In the conventional HVAC system, set CFM values for Zones A and D, whose desired CFM values are less than the blower minimum CFM value, would be set at the blower minimum CFM value 200 because setting the set CFM values below the blower minimum CFM value is not allowed. For requesting Zones B, C and E, their set CFM values would be their desired CFM values, 450, 200 and 300, respectively, as they are greater than the blower minimum CFM value. For example, using these set CFM values, when Zones A, B and D concurrently request for conditioning in the conventional HVAC system, the calculated total CFM value for conditioning would be 850 CFM, which is 150 CFM value higher than the actually desired CFM.

But using the disclosed HVAC system, an operator would be able to set the CFM values of all zones at their desired values even if those values are less than the blower minimum CFM value. As a result, the calculated total CFM value for the above example would be the actually desired CFM value 700, which is 150 CFM lower than that of the conventional systems. Thus, not only that the disclosed HVAC system would save 150 CFM of air that would have been otherwise wasted in the conventional HVAC system, it would provide more adequately conditioned environmental conditions for the occupants.

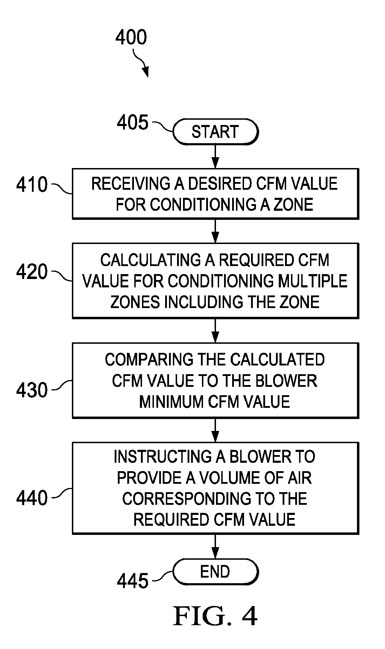

FIG. 4 is a flow diagram of an embodiment of a method 400 for operating a controller in an HVAC system carried out according to the principles of the disclosure. In one embodiment, a processor of the controller is employed to carry out the method 400. A process of the controller can be directed by a computer program product stored on a memory of the controller to perform the various steps of the method 400. The method begins in a step 405. In one embodiment, the method 400 is performed during manufacturing or testing of the controller or the HVAC system.

In a step 410, a desired CFM value for each zone in a building is received during a CFM setup process. The received CFM values may be stored in a memory of a HVAC controller as the set CFM values. As mentioned before, the received CFM value may be a portion of programming data inputted by the user via a user display.

In a step 420, a total CFM value required to condition multiple zones is calculated in response to concurrently receiving condition requests from the multiple zones. One of the zones requesting conditioning is a zone that has a less than blower minimum set CFM value. The total CFM value is calculated by adding up the set CFM values of the all zones requesting conditioning.

In a step 430, the calculated total CFM value is compared to the blower minimum CFM value. In some embodiments, the calculated total CFM value may be less than the blower minimum CFM value. In such embodiments, instead of the calculated total CFM value, the blower minimum CFM value is used as the total CFM value. In some embodiments, the total CFM value is recalculated every time there is a change in the zones requesting conditioning. For example, in addition to the zones currently being conditioned, when other zone(s) request conditioning, the total CFM is re-calculated. In some embodiments, the blower minimum CFM value may be used until a recalculated total CFM value exceeds the blower minimum CFM value.

In a step 440, the blower of the HVAC system is instructed to generate and provide a volume of air corresponding to the total CFM value. The instruction originates from a processor of the controller and is sent as control signals to the blower via a component interface. The method 400 ends in a step 445.

The above-described methods may be embodied in or performed by various conventional digital data processors, microprocessors or computing devices, wherein these devices are programmed or store executable programs of sequences of software instructions to perform one or more of the steps of the methods, e.g., steps of the method of FIG. 4. The software instructions of such programs may be encoded in machine-executable form on conventional digital data storage media that is non-transitory, e.g., magnetic or optical disks, random-access memory (RAM), magnetic hard disks, flash memories, and/or read-only memory (ROM), to enable various types of digital data processors or computing devices to perform one, multiple or all of the steps of one or more of the above-described methods, e.g., one or more of the steps of the method of FIG. 4. Additionally, an apparatus, such as a HVAC controller, may be designed to include the necessary circuitry or programming to perform each step of a method disclosed herein.

Those skilled in the art to which this application relates will appreciate that other and further additions, deletions, substitutions and modifications may be made to the described embodiments.

## Claims

1. A HVAC system comprising:
a blower having a minimum CFM value; and
a controller having:
an interface configured to receive a desired CFM value for conditioning a zone, and
a processor configured to determine a required CFM value for conditioning multiple zones including said zone based on said desired CFM value, wherein said desired CFM value is below said minimum CFM value of said blower.

2. The HAVC system of Claim 1, wherein said processor is further configured to compare said required CFM value to said minimum CFM value of said blower.

3. The HVAC system of Claim 2, wherein said processor is further configured to instruct said blower to generate a volume of air corresponding to said required CFM value when said required CFM value is greater than said minimum CFM value.

4. The HVAC system of Claim 2, wherein said processor is further configured to instruct said blower to generate a volume of air corresponding to said minimum CFM value when said required CFM value is equal to or less than said minimum CFM value.

5. A controller for a HVAC system comprising:
an interface configured to receive a desired CFM value for conditioning a zone; and
a processor configured to determine a required CFM value for conditioning multiple zones including said zone based on said desired CFM value, wherein said desired CFM value is below a minimum CFM value of a blower for said HVAC system.

6. The controller of Claim 5, wherein said required CFM value is also based on other desired CFM values for zones other than said zone.

7. The controller of claim 5, wherein said required CFM value is greater than said minimum CFM value.

8. The controller of Claim 5, wherein said required CFM value is equal to or less than said minimum CFM value.

9. A method of operating a controller of an HVAC system, comprising:
receiving a desired CFM value for conditioning a zone, wherein said desired CFM value is below a minimum CFM value of said blower; and
determining a required CFM for conditioning multiple zones including said zone based on said desired CFM value.

10. The method of claim 9 further comprising comparing said required CFM value to said minimum CFM value of said blower and when said required CFM value is greater than said minimum CFM value, instructing said blower to generate a volume of air corresponding to said required CFM value, and when said required CFM value is less than said minimum CFM value, instructing said blower to generate a volume of air corresponding to said minimum CFM value.
